# EUROPÄISCHE PATENTANMELDUNG

(11) **EP 4 467 810 A2**
(43) Veröffentlichungstag der Anmeldung: **27.11.2024**
(21) Anmeldenummer: 24188690.2
(22) Anmeldetag: 15.07.2024

(54) **SCROLLVAKUUMPUMPE UND VERFAHREN ZUM HERSTELLEN EINER SCROLLVAKUUMPUMPE**

(71) Anmelder: Pfeiffer Vacuum Technology AG, 35614 Asslar (DE)
(72) Erfinder: HARAPAT, Erhard, 35614 Asslar (DE); PAULI, Lars, 35606 Solms (DE); BECKER Jonas, 35649 Bischoffen (DE); SÖHNGEN, Wolfgang, 35647 Waldsolms (DE)
(74) Vertreter: Manitz Finsterwald Patent- und Rechtsanwaltspartnerschaft mbB

(57) **Zusammenfassung**

Die Erfindung betrifft eine Scrollvakuumpumpe mit einem Pumpsystem, das ein feststehendes Spiralbauteil und ein mit diesem pumpwirksam zusammenwirkendes bewegliches Spiralbauteil umfasst, einer im Betrieb um eine Drehachse rotierenden Antriebswelle mit einem Exzenterabschnitt zum Antreiben des beweglichen Spiralbauteils, und einem elektrischen Antriebsmotor für die Antriebswelle, wobei das bewegliche Spiralbauteil eine Spiralanordnung mit Spiralwänden, von diesen begrenzten Spiralnuten und deren Boden bildendem Spiralgrund sowie einen mit dem Exzenterabschnitt der Antriebswelle zusammenwirkenden Träger für die Spiralanordnung umfasst, wobei das feststehende Spiralbauteil eine Spiralanordnung mit Spiralwänden und Spiralgrund sowie einen Träger für die Spiralanordnung umfasst. Dabei weist gemäß einem ersten Aspekt zumindest eine Spiralwand an einem freien Endabschnitt eine reduzierte Dicke auf, die kleiner ist als die Dicke eines dem freien Endabschnitt vorgelagerten, in den freien Endabschnitt übergehenden Abschnitts der Spiralwand. Gemäß einem zweiten Aspekt weist zumindest eine Spiralwand einen freien Endabschnitt auf, der an seiner radialen Außenseite und/oder an seiner radialen Innenseite relativ zu einem dem freien Endabschnitt vorgelagerten, in den freien Endabschnitt übergehenden Abschnitt der Spiralwand einen Rücksprung aufweist.

## Beschreibung

Die Erfindung betrifft eine Scrollvakuumpumpe mit einem Pumpsystem, das ein feststehendes Spiralbauteil und ein mit diesem pumpwirksam zusammenwirkendes bewegliches Spiralbauteil umfasst, einer im Betrieb um eine Drehachse rotierenden Antriebswelle mit einem Exzenterabschnitt zum Antreiben des beweglichen Spiralbauteils, und einem elektrischen Antriebsmotor für die Antriebswelle, wobei das bewegliche Spiralbauteil eine Spiralanordnung mit Spiralwänden, von diesen begrenzten Spiralnuten und deren Boden bildendem Spiralgrund sowie einen mit dem Exzenterabschnitt der Antriebswelle zusammenwirkenden Träger für die Spiralanordnung umfasst, und wobei das feststehende Spiralbauteil eine Spiralanordnung mit Spiralwänden und Spiralgrund sowie einen Träger für die Spiralanordnung umfasst.

Die Erfindung betrifft außerdem ein Verfahren zum Herstellen einer derartigen Scrollvakuumpumpe.

Scrollvakuumpumpen sind grundsätzlich bekannt, z.B. aus EP 3 153 708 A2, EP 3 617 511 A2, EP 3 647 599 A2, EP 4 174 285 A1 und EP 4 253 720 A2.

Eine Scrollpumpe ist eine gegen Atmosphärendruck verdichtende Verdrängerpumpe, die sich unter anderem als Kompressor einsetzen lässt. Eine Scrollvakuumpumpe kann zur Erzeugung eines Vakuums in einem Rezipienten verwendet werden, der an einen Gaseinlass der Scrollvakuumpumpe angeschlossen ist.

Scrollvakuumpumpen werden auch als Spiralvakuumpumpen oder Spiralfördereinrichtungen bezeichnet. Das einer Scrollvakuumpumpe zugrundeliegende Pumpprinzip ist aus dem Stand der Technik grundsätzlich bekannt und wird daher nachstehend nur kurz erläutert.

Typischerweise weist das Pumpsystem einer Scrollvakuumpumpe zwei ineinander verschachtelte bzw. ineinander gesteckte, beispielsweise archimedische, Spiralzylinder auf, die auch lediglich als Spiralen oder Spiralbauteile bezeichnet werden. Jeder Spiralzylinder umfasst dabei zumindest eine Spiralwand mit einem an einer Stirnseite der Spiralwand vorgesehenen, insbesondere plattenförmigen, Träger, wobei die äußeren Windungen des Spiralzylinders, beispielsweise die zwei oder drei äußersten Windungen des Spiralzylinders, durch Wandabschnitte gebildet werden können, die vom Mittelpunkt der Spiralen jeweils einen in Umfangsrichtung konstanten Abstand aufweisen. Auch wenn diese Wandabschnitte strenggenommen keine Spiralabschnitte, sondern Kreisabschnitte bilden, werden sie im Kontext der vorliegenden Offenbarung der Spirale zugerechnet und als Windungen der Spirale bezeichnet.

Die Spiralzylinder sind dabei so ineinandergesteckt, dass die beiden Spiralzylinder abschnittsweise halbmond- bzw. sichelförmige Volumina (Förderräume) umschließen. Eine der beiden Spiralen ist dabei unbeweglich bzw. feststehend im Gehäuse der Pumpe angeordnet, wohingegen die andere Spirale mitsamt ihres Trägers über den Exzenterabschnitt der Antriebswelle auf einer kreisförmigen Bahn bewegt werden kann, weshalb diese Spirale zusammen mit ihrem Träger auch als Orbiter bezeichnet wird. Dieses bewegliche Spiralbauteil führt somit eine sogenannte zentralsymmetrische Oszillation aus, was auch als "Orbitieren" oder "Wobbeln" bezeichnet wird. Ein zwischen den Spiralzylindern eingeschlossenes halbmondförmiges Volumen (Förderraum) wandert während des Orbitierens des beweglichen Spiralbauteils innerhalb der Spiralen zunehmend nach innen, wodurch mittels des wandernden Volumens das zu pumpende Prozessgas von einem radial außenliegenden Gaseinlass des Pumpsystems nach radial innen zu einem insbesondere in der Spiralmitte befindlichen Gasauslass des Pumpsystems gefördert wird.

Die Herstellung der Spiralbauteile von Scrollvakuumpumpen ist mit einem hohen Aufwand verbunden, da insbesondere die Spiralwände mit einer sehr hoher Präzision gefertigt werden müssen. Vorgegebene Fertigungstoleranzen dürfen nicht überschritten werden, da bereits geringe Maßabweichungen im Betrieb der Scrollvakuumpumpe zu einer sogenannten Spaltüberbrückung führen können, was zu Verschleiß und Geräuschemission führen kann. Als eine Ursache für fehlende Maßhaltigkeit wurden elastische Verformungen der Spiralwände an deren freien Endabschnitten erkannt. Wenn die Spiralwände durch eine zerspanende Bearbeitung hergestellt werden und dabei z.B. ein rotierender Schaftfräser während der Bearbeitung gegen die radiale Innenseite oder gegen die radiale Außenseite der herzustellenden Spiralwand gedrückt wird, dann wird die Spiralwand aufgrund ihrer elastischen Verformbarkeit ausgelenkt. Hierdurch wird von der betreffenden Wandseite weniger Material entfernt als unter ansonsten gleichen Bedingungen bei einer steiferen Spiralwand, die nicht oder weniger stark ausgelenkt wird. Wenn das Bearbeitungswerkzeug entfernt wird, federt die Spiralwand wieder in die ursprüngliche Position zurück. Aufgrund der geringeren Materialabnahme kann es passieren, dass die vorgegebene Fertigungstoleranz nicht eingehalten wird.

Derartige Rückfederungseffekte treten besonders stark an den Endabschnitten der Spiralwände auf, da die Spiralwände dort eine geringere Steifigkeit besitzen als an den freien Endabschnitten vorgelagerten Wandabschnitten. Es wurde beobachtet, dass diese Rückfederungseffekte die Maßhaltigkeit stark beeinträchtigen können und die bearbeitete Spiralwand an ihren Endabschnitten über eine jeweilige Fertigungstoleranz hinaus zurückfedert.

Diese Rückfederungseffekte sind auch deshalb problematisch, da sie den Herstellungsprozess bei einer Serienfertigung von Spiralbauteilen verkomplizieren. In der Praxis wird die Maßhaltigkeit jedes einzelnen Spiralbauteils unmittelbar nach dessen Herstellung z.B. mittels einer Koordinatenmessmaschine automatisch überprüft. Auf der Basis der Prüfmessung werden Einstellungen der Werkzeugmaschine erforderlichenfalls korrigiert, um für das nächste herzustellende Spiralbauteil die aufgrund der Bearbeitung erwarteten Konturen an die Sollkonturen so anzupassen, dass diese innerhalb der jeweiligen Fertigungstoleranzen liegen. Die in der Praxis verwendeten Korrekturalgorithmen können die erwähnten Rückfederungseffekte nicht berücksichtigen, werden durch diese Effekte also in ihrer Interpretation der Korrekturmessungen gestört, was zur Folge hat, dass keine schnelle automatische Korrektureinstellung der Bearbeitungsmaschine von Spiralbauteil zu Spiralbauteil möglich ist. Stattdessen muss von der jeweiligen Bedienperson in die Auswertung der Korrekturmessungen manuell eingegriffen werden, indem z.B. die von Rückfederungseffekten betroffenen Abschnitte des Werkstücks, insbesondere also die freien Endabschnitte der Spiralwände, bei der Auswertung der Korrekturmessungen ignoriert oder auf andere Weise berücksichtigt werden.

Dies macht den Herstellungsprozess wesentlich zeitaufwändiger und damit erheblich teurer.

Aufgabe der Erfindung ist es, eine Scrollvakuumpumpe und ein Verfahren zu deren Herstellung zu schaffen, die eine einfache, schnelle und kostengünstige Fertigung von Bauteilen von Scrollvakuumpumpen wie insbesondere der Spiralbauteile bei hoher Maßhaltigkeit ermöglichen, wobei insbesondere eine schnelle automatische Prüfung der Maßhaltigkeit und erforderlichenfalls Korrektur der Einstellungen der zur Bearbeitung eingesetzten Werkzeugmaschine möglich sein soll.

Die Lösung dieser Aufgabe erfolgt jeweils durch die Merkmale der unabhängigen Ansprüche.

Eine erfindungsgemäße Scrollvakuumpumpe gemäß dem unabhängigen Anspruch 1 zeichnet sich insbesondere dadurch aus, dass zumindest eine Spiralwand an einem freien Endabschnitt eine reduzierte Dicke aufweist, die kleiner ist als die Dicke eines dem freien Endabschnitt vorgelagerten, in den freien Endabschnitt übergehenden Abschnitts der Spiralwand.

Eine erfindungsgemäße Scrollvakuumpumpe gemäß dem unabhängigen Anspruch 2 zeichnet sich insbesondere dadurch aus, dass zumindest eine Spiralwand einen freien Endabschnitt aufweist, der an seiner radialen Außenseite und/oder an seiner radialen Innenseite relativ zu einem dem freien Endabschnitt vorgelagerten, in den freien Endabschnitt übergehenden Abschnitt der Spiralwand einen Rücksprung aufweist.

Diese beiden Aspekte der Erfindung beruhen auf dem Gedanken, einen jeweiligen Endabschnitt einer Spiralwand an der radialen Innenseite und/oder an der radialen Außenseite so zu fertigen, dass Rückfederungseffekte nicht mehr dazu führen können, dass ein Teil des Endabschnitts außerhalb eines jeweils vorgegebenen Toleranzbereiches liegt. Hierzu wird der Endabschnitt bei der Fertigung mit einer reduzierten Dicke und/oder mit einem Rücksprung versehen, d.h. es wird am Endabschnitt mehr Material entfernt als es bei einem steiferen Endabschnitt erforderlich wäre. Es hat sich gezeigt, dass die erfindungsgemäßen Maßnahmen die eingangs geschilderten Nachteile vermeiden, dabei die Performance der Scrollvakuumpumpe aber nicht beeinträchtigen.

Dabei muss nicht zwingend die Dicke des freien Endabschnitts verringert werden, wie es bei dem ersten Aspekt der Erfindung vorgesehen ist. Der Endabschnitt kann gemäß dem zweiten Aspekt der Erfindung an seiner radialen Innenseite oder seiner radialen Außenseite mit einem Rücksprung versehen werden, der nicht die Dicke des gesamten Endabschnitts reduziert, wenn dieser auf der gegenüberliegenden Seite z.B. eine radiale Erweiterung aufweist, der gleichwohl aber dafür sorgt, dass der Endabschnitt an der betreffenden Seite trotz einer während der Bearbeitung erfolgenden elastischen Auslenkung nach der Bearbeitung innerhalb eines jeweiligen Toleranzbereiches liegt.

Die Nichteinhaltung vorgegebener Toleranzen aufgrund von Rückfederungseffekten wird somit durch die Erfindung vermieden, was vor allem den Vorteil hat, dass die Ergebnisse von Prüfmessungen, die beispielsweise von automatischen Koordinatenmessmaschinen erhalten werden, besser automatisch interpretiert und gegebenenfalls in Korrektureinstellungen der jeweiligen Bearbeitungsmaschine umgesetzt werden können. Manuelle Eingriffe in diesen automatischen Optimierungsprozess durch eine Bedienperson sind nicht mehr erforderlich, was den Herstellungsprozess insgesamt vereinfacht, beschleunigt und kostengünstiger macht. Ein weiterer Vorteil besteht darin, dass durch die reduzierte Dicke bzw. durch den Rücksprung, d.h. durch die größere Materialabnahme, auch größere Toleranzen für die Bearbeitung vorgegeben werden können, was grundsätzlich die Herstellung vereinfacht.

Vorteilhafte Weiterbildungen der Erfindung sind auch in den abhängigen Ansprüchen, der nachfolgenden Beschreibung sowie der Zeichnung angegeben.

Gemäß einigen Ausführungsbeispielen kann vorgesehen sein, dass jeder freie Endabschnitt einer jeden Spiralwand eine reduzierte Dicke bzw. einen Rücksprung aufweist.

Des Weiteren kann vorgesehen sein, dass die reduzierte Dicke des freien Endabschnitts über die gesamte Wandhöhe kleiner ist als die Dicke des vorgelagerten Abschnitts und/oder dass der Rücksprung sich über die gesamte Wandhöhe des freien Endabschnitts erstreckt.

Insbesondere kann vorgesehen sein, dass die reduzierte Dicke des freien Endabschnitts über die gesamte Wandhöhe konstant ist, und/oder dass der Rücksprung über die gesamte Wandhöhe des Endabschnitts konstant ist.

Dies ist aber nicht zwingend. Die Steifigkeit des freien Endabschnitts ist am Spiralgrund höher als im Bereich der Spitze der Spiralwand. Gemäß einigen Ausführungsbeispielen kann daher vorgesehen sein, dass die reduzierte Dicke des freien Endabschnitts vom Spiralgrund bis zur Spitze der Spiralwand stetig abnimmt, wobei insbesondere am Spiralgrund der freie Endabschnitt und der vorgelagerte Abschnitt der Spiralwand die gleiche Dicke besitzen, oder dass der Rücksprung des freien Endabschnitts von der Spitze der Spiralwand bis zum Spiralgrund stetig abnimmt, wobei insbesondere am Spiralgrund der Rücksprung gleich Null ist.

Gemäß einigen Weiterbildungen der Erfindung kann vorgesehen sein, dass der freie Endabschnitt sowohl an seiner radialen Innenseite als auch an seiner radialen Außenseite jeweils einen Rücksprung relativ zu dem vorgelagerten Abschnitt aufweist. Alternativ kann gemäß einigen Ausführungsbeispielen vorgesehen sein, dass der freie Endabschnitt nur an seiner radialen Innenseite einen Rücksprung relativ zu dem vorgelagerten Abschnitt aufweist.

Einige Weiterbildungen sehen vor, dass die Spiralwand durch spanende Bearbeitung mittels einer Werkzeugmaschine hergestellt worden ist, die ein rotierendes Werkzeug, insbesondere ein Fräswerkzeug, aufweist, das während der Bearbeitung gegen die radiale Innenseite bzw. gegen die radiale Außenseite der herzustellenden Spiralwand gedrückt wird. Insbesondere ist dabei vorgesehen, dass das Werkzeug während der Bearbeitung auf einer die reduzierte Dicke und/oder den Rücksprung am Endabschnitt der Spiralwand vorgebenden Bahn geführt wird.

Dabei kann vorgesehen sein, dass in zumindest einer senkrecht zur Drehachse der Antriebswelle verlaufenden Ebene eine Sollkontur für die Spiralwand vorgegeben ist, wobei die Bahn für das Werkzeug derart vorgegeben ist, dass der während der Bearbeitung durch das Werkzeug ausgelenkte und nach der Bearbeitung zurückfedernde Endabschnitt der Spiralwand innerhalb der Sollkontur bleibt.

Die Sollkontur bezieht sich dabei insbesondere auf eine Ebene, in der die Spitze der Spiralwand liegt, da in diesem Bereich eine Auslenkung der Spiralwand während der Bearbeitung am größten ist.

Gemäß einigen Ausführungsbeispielen ist vorgesehen, dass das bewegliche Spiralbauteil und das feststehende Spiralbauteil jeweils aus Aluminium oder aus einem Aluminium enthaltenden Material hergestellt sind.

Des Weiteren kann vorgesehen sein, dass die reduzierte Dicke des Endabschnitts zwischen 85 % bis 89 %, insbesondere zwischen 92 % und 95 %, der Dicke des vorgelagerten Abschnitts beträgt, oder dass die reduzierte Dicke des Endabschnitts um 1/10 mm bis 3/10 mm kleiner ist als die Dicke des vorgelagerten Abschnitts. Alternativ oder zusätzlich kann vorgesehen sein, dass der Rücksprung des Endabschnitts zwischen 0,5/10 mm und 2/10 mm liegt.

Gemäß einem konkreten Beispiel kann ein eine konstante Dicke aufweisender Endabschnitt auf beiden Seiten jeweils einen Rücksprung von 1/10 mm aufweisen, so dass sich insgesamt eine Reduzierung der Dicke um 2/10 mm ergibt. Beispielsweise kann die Dicke des vorgelagerten Abschnitts im Bereich von 3,5 bis 3,7 mm liegen, so dass die reduzierte Dicke des Endabschnitts in einem Bereich von 3,3 bis 3,5 mm liegt, was etwa 94 % der Dicke des vorgelagerten Abschnitts entspricht.

Gemäß einigen Ausführungsbeispielen kann vorgesehen sein, dass die in Verlaufsrichtung der Spiralwand gemessene Länge des Endabschnitts im Bereich von 3 mm bis 10 mm liegt.

Bei dem erfindungsgemäßen Verfahren zum Herstellen einer Scrollvakuumpumpe wie hierin offenbart oder zum Herstellen eines Spiralbauteils für eine Scrollvakuumpumpe wie hierin offenbarte ist vorgesehen, dass die Spiralwand durch spanende Bearbeitung mittels einer Werkzeugmaschine hergestellt wird, die ein rotierendes Werkzeug, insbesondere ein Fräswerkzeug, aufweist, das während der Bearbeitung gegen die radiale Innenseite bzw. gegen die radiale Außenseite der herzustellenden Spiralwand gedrückt wird.

Bei dem Fräswerkzeug handelt es sich insbesondere um einen Schaftfräser, beispielsweise um einen Walzenfräser oder einen Walzenstirnfräser.

Des Weiteren kann vorgesehen sein, dass das Werkzeug während der Bearbeitung auf einer Bahn geführt wird, durch welche die reduzierte Dicke und/oder der Rücksprung am Endabschnitt der Spiralwand vorgegeben wird.

Des Weiteren kann vorgesehen sein, dass in zumindest einer senkrecht zur Drehachse der Antriebswelle verlaufenden Ebene eine Sollkontur für die Spiralwand vorgegeben wird, und wobei die Bahn, auf der das Werkzeug während der Bearbeitung geführt wird, derart vorgegeben wird, dass der während der Bearbeitung durch das Werkzeug ausgelenkte und nach der Bearbeitung zurückfedernde Endabschnitt der Spiralwand innerhalb der Sollkontur bleibt.

Dabei ist insbesondere vorgesehen, dass die Bahn in Abhängigkeit von der Sollkontur und den jeweiligen Gegebenheiten vorgegeben wird. Die jeweiligen Gegebenheiten betreffen insbesondere die mechanischen Eigenschaften der herzustellenden Spiralwand und die Kraft, mit der das Werkzeug gegen die Innenseite bzw. Außenseite der Spiralwand gedrückt wird, sowie gegebenenfalls weitere für die Materialabnahme relevante Parameter der Werkzeugmaschine. Hieraus ergibt sich das potenzielle Maß für den durch das Zurückfedern der Spiralwand verursachten Fehler, also die potenzielle Abweichung von einer jeweils vorgegebenen Toleranz, so dass die Bahn für das Werkzeug entsprechend vorgegeben werden kann, um genügend Material von der herzustellenden Spiralwand zu beseitigen, so dass die Rückfederung tatsächlich keine Toleranzabweichung verursacht.

Des Weiteren kann vorgesehen sein, dass für die reduzierte Dicke des Endabschnitts und/oder für den Rücksprung des Endabschnitts einerseits und für die Dicke des dem Endabschnitt vorgelagerten Abschnitts andererseits unterschiedliche Maßtoleranzen vorgegeben werden. Insbesondere kann die Maßtoleranz jeweils +/-1/10 mm betragen und insbesondere zwischen +/- 1/100 mm und +/-6/100 mm liegen.

Derartige Maßtoleranzen sind aber nicht zwingend, d.h. es können auch andere Maßtoleranzen vorgegeben werden, d.h. die jeweilige Werkzeugmaschine kann auch mit anderen Schnittdaten betrieben werden.

Die Erfindung wird im Folgenden beispielhaft unter Bezugnahme auf die Zeichnung beschrieben. Es zeigen:
- Fig. 1: ein Beispiel für eine herkömmliche Scrollvakuumpumpe zur Erläuterung des Grundaufbaus einer solchen Scrollvakuumpumpe,
- Fig. 2 und 3: verschiedene Ansichten eines herkömmlichen beweglichen Spiralbauteils einer Scrollvakuumpumpe gemäß Fig. 1 zur Erläuterung des Aufbaus eines solchen auch als Orbiter bezeichneten Spiralbauteils,
- Fig. 4: eine schematische Darstellung zur Erläuterung der Problematik des Zurückfederns der Endabschnitte von Spiralwänden,
- Fig. 5: eine Darstellung zur Erläuterung der Auswirkungen von Rückfederungseffekten gemäß Fig. 4,
- Fig. 6: eine Teilansicht eines beweglichen Spiralbauteils gemäß einem Ausführungsbeispiel der Erfindung,
- Fig. 7: eine vergrößerte Darstellung eines Endabschnitts einer Spiralwand des Spiralbauteils von Fig. 6, und
- Fig. 8 und 9: schematische Darstellungen zur Erläuterung einer erfindungsgemäßen Herstellung von erfindungsgemäß ausgebildeten Spiralwänden.

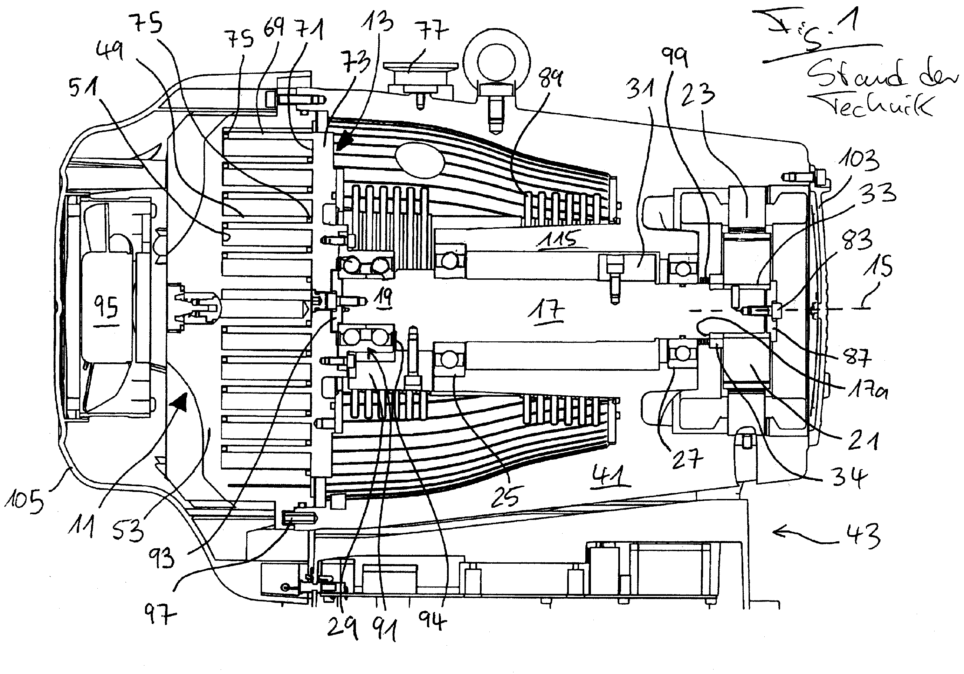

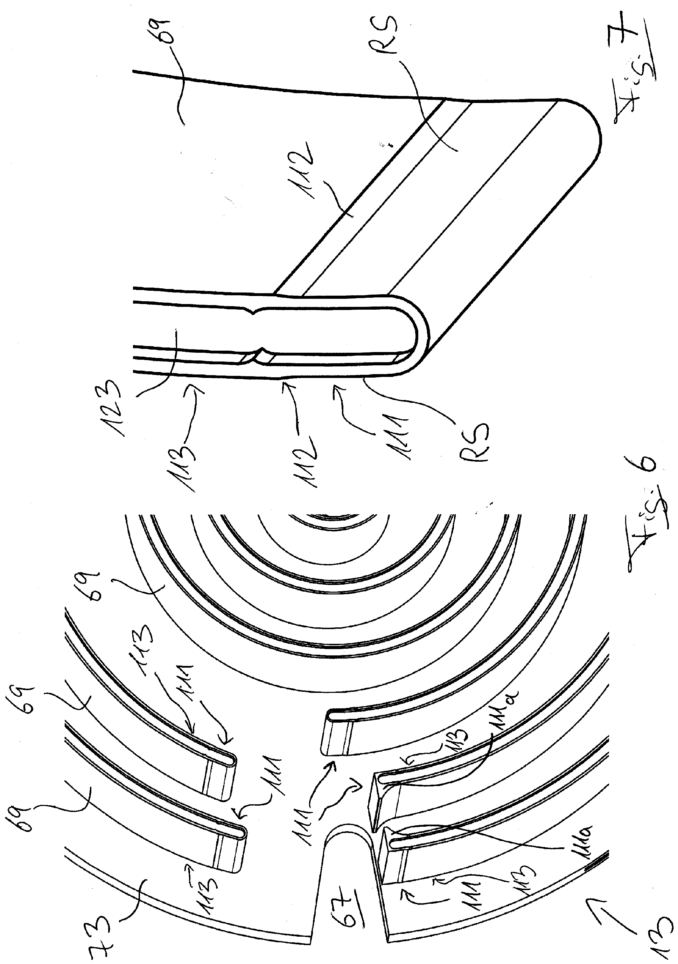

Fig. 1 zeigt eine herkömmliche Scrollvakuumpumpe mit einem Grundaufbau, der im Folgenden beschrieben wird. Aufbau und Funktionsweise einer solchen Scrollvakuumpumpe sind dem Fachmann bekannt. Diese herkömmliche Scrollvakuumpumpe kann in erfindungsgemäßer Weise weitergebildet werden. Dies wird anhand der Fig. 6 bis 9 erläutert.

Die Scrollvakuumpumpe gemäß Fig. 1 umfasst ein Pumpsystem mit einem feststehenden Spiralbauteil 11 und einem beweglichen Spiralbauteil 13, die während des Betriebs pumpwirksam zusammenwirken. Ferner umfasst die Scrollvakuumpumpe eine im Betrieb um eine Drehachse 15 rotierende Antriebswelle 17 mit einem Exzenterabschnitt 19 zum Antreiben des beweglichen Spiralbauteils 13. Des Weiteren ist die Scrollvakuumpumpe mit einem elektrischen Antriebsmotor 21, 23 versehen, der dazu dient, die Antriebswelle 17 in Rotation um die Drehachse 15 zu versetzen. Der elektrische Antriebsmotor umfasst einen radial inneren Motorrotor 21, der auch als Läufer bezeichnet wird, und einen radial äußeren Motorstator 23.

Die Antriebswelle 17 ist an zwei in axialer Richtung beabstandeten Lagerstellen 25, 27 drehbar am Pumpengehäuse 41 gelagert. Die vordere Lagerstelle 25 wird von einem vorderen Wälzlager gebildet, das als Festlager ausgebildet ist, während die hintere Lagerstelle 27 von einem hinteren Wälzlager gebildet wird, das als Loslager ausgebildet ist. Zur Lagerung der Antriebswelle 17 ist das Pumpengehäuse 41 mit einem hülsenförmigen Abschnitt versehen, der im Folgenden auch als Lagerhülse 115 bezeichnet wird. Die beiden Wälzlager 25, 27 befinden sich somit radial zwischen der Antriebswelle 17 und der Lagerhülse 115.

Beide Lagerstellen 25, 27 befinden sich auf der dem Exzenterabschnitt 19 der Antriebswelle 17 zugewandten Seite des Antriebsmotor 21, 23. Somit befinden sich alle Lagerstellen 25, 27 innerhalb des Pumpengehäuses 41 vor dem Antriebsmotor 21, 23. Dabei befinden sich die Lagerstellen 25, 27 im atmosphärischen Bereich der Pumpe, d.h. nicht in dem Bereich, in dem während des Pumpbetriebs ein Vakuum herrscht. Der Exzenterabschnitt 19 ist einstückig mit dem vorderen Ende der Antriebswelle 17 verbunden und der Antriebsmotor 21, 23 sitzt auf dem hinteren Ende der Antriebswelle 17. Durch diesen Aufbau kann der Antriebsmotor 21, 23 auf das hintere Ende der Antriebswelle 17 aufgeschoben werden. Die Montage und das Austauschen des Antriebsmotors 21, 23 oder von Teilen des Antriebsmotors 21, 23 wird hierdurch vereinfacht.

Das Wuchtkonzept zum Auswuchten des unter anderem die Antriebswelle 17 und das bewegliche Spiralbauteil 13 umfassenden rotierenden Systems umfasst ein vorderes Wuchtgewicht 29 und ein hinteres Wuchtgewicht 31, die an der Antriebswelle 17 angebracht sind. Das vordere Wuchtgewicht 29 ist dabei im Bereich des vorderen Endes der Antriebswelle 17 und des Exzenterabschnitts 19 angeordnet. Das hintere Wuchtgewicht 31 befindet sich vor der hinteren Lagerstelle 27 und damit vor dem Antriebsmotor.

In Abwandlungen dieses Grundaufbaus sind auch andere Wuchtkonzepte möglich. Beispielsweise kann das hintere Wuchtgewicht oder ein zusätzliches Wuchtgewicht am hinteren Ende der Antriebswelle im Bereich des Antriebsmotors angeordnet sein.

Des Weiteren ist ein auf das hintere Ende der Antriebswelle 17 stirnseitig aufgesetztes Druckelement 87 vorgesehen, welches rotationssymmetrisch ausgebildet ist und nicht als Wuchtgewicht dient.

Das Druckelement 87 ist mittels einer zentralen Schraube 83 mit der Antriebswelle 17 verbunden. Zur Anpassung des Außendurchmessers des hinteren Abschnitts der Antriebswelle 17 an den Innendurchmesser des Motorrotors 21 ist der hintere Abschnitt der Antriebswelle 17 mit einem Hülsenelement 33 versehen. Das Hülsenelement 33 ist mittels des Druckelements 87 und der zentralen Schraube 83 mit dem Motorrotor 21 verklemmt. Mittels eines Positionierstifts 33a ist das Hülsenelement 33 auf der Antriebswelle 17 befestigt. Des Weiteren ist axial zwischen einer an der Antriebswelle 17 ausgebildeten Schulter 17a und dem Motorrotor 21 ein ringförmiges Zwischenelement 34 angeordnet. Der Motorrotor 21 ist über das Zwischenelement 34 zwischen dem Druckelement 87 und der als Widerlager für das Zwischenelement 34 dienenden Schulter 17a der Antriebswelle 17 eingespannt. Im Bereich der Schulter 17a ist zwischen dem die hintere Lagerstelle 27 bildenden Loslager 27 und dem Zwischenelement 34 eine Wellfeder 99 angeordnet.

Der Antriebsmotor 21, 23 ist vollständig innerhalb des Pumpengehäuses 41 angeordnet, d.h. der Antriebsmotor 21, 23 ist über seine gesamte axiale Länge von dem Pumpengehäuse 41 in Umfangsrichtung umgeben, steht als nicht nach hinten vor. An seinem hinteren Ende ist das Pumpengehäuse 41 mittels eines separaten Motordeckels 103 verschlossen.

Am vorderen Ende des Pumpengehäuses 41 befindet sich das Pumpsystem mit dem feststehenden Spiralbauteil 11 und dem beweglichen Spiralbauteil 13. Das auch als Spiralgehäuse bezeichnete feststehende Spiralbauteil 11 ist auf das vordere Ende des Pumpengehäuses 41 stirnseitig aufgeschraubt und von einer ebenfalls am Pumpengehäuse 41 angebrachten Haube 105 umgeben, in der außerdem ein Lüfter 95 untergebracht ist.

Das bewegliche Spiralbauteil 13 ist über ein als Wälzlager ausgebildetes Flanschlager 91 an dem Exzenterabschnitt 19 gelagert. Axial zwischen dem beweglichen Spiralbauteil 13 und dem Exzenterabschnitt 19 befindet sich eine Druckscheibe 93. Zwischen einer umlaufenden Schulter der Antriebswelle 17 am Übergang in den Exzenterabschnitt 19 und dem Flanschlager 91 befindet sich eine Passscheibe 94. Die korrekte Ausrichtung in Umfangsrichtung zwischen dem feststehenden Spiralbauteil 11 und dem Pumpengehäuse 41 ist durch einen Positionierstift 97 gewährleistet. In Abwandlungen dieses Grundaufbaus können auch mehrere Positionierstifte 79 vorgesehen sein.

Das feststehende Spiralbauteil 11 umfasst eine Spiralanordnung mit Spiralwänden 49 und Spiralgrund 51 sowie einen mit seiner dem beweglichen Spiralbauteil 13 zugewandten Seite den Spiralgrund 51 bildenden Träger 53 für die Spiralanordnung. Beispielsweise können zwei radial äußere Spiralwände 49 vorgesehen sein, die auf konzentrischen Kreisen liegen und in Umfangsrichtung unterbrochen sind. Hierdurch entsteht eine Parallelpumpstruktur aus parallel pumpenden, von den betreffenden Spiralnuten zwischen den Spiralwänden 49 gebildeten Kanälen, die in einen spiralförmig nach radial innen verlaufenden Pumpkanal übergehen, der von einer spiralförmig verlaufenden Spiralnut gebildet wird und von einer spiralförmig verlaufenden Spiralwand 49 begrenzt ist.

Das bewegliche Spiralbauteil 13 umfasst ebenfalls eine Spiralanordnung mit Spiralwänden 69 und Spiralgrund 71 sowie einen plattenförmigen, mit seiner dem feststehenden Spiralbauteil 11 zugewandten Seite den Spiralgrund 71 bildenden Träger 73 für die Spiralanordnung. Es können entsprechend der Spiralanordnung des feststehenden Spiralbauteils 11 zwei radial äußere Spiralwände 69 vorgesehen sein, die auf konzentrischen Kreisen liegen und im Bereich eines nicht dargestellten Gaseinlasses in Umfangsrichtung unterbrochen sind. Eine radial innenliegende Spiralwand 69 verläuft spiralförmig.

Sowohl die Spiralwände 49 des feststehenden Spiralbauteils 11 als auch die Spiralwände 69 des beweglichen Spiralbauteils 13 sind an ihren vom jeweiligen Spiralgrund 51 bzw. 71 abgewandten Ende mit einem langgestreckten Dichtungselement 75 (TipSeal) versehen.

Die vorstehend beschriebenen Spiralanordnungen der beiden Spiralbauteile 11, 13 können auch anders ausgebildet sein.

Über einen Einlassflansch 77 gelangt das zu pumpende Gas in das die beiden Spiralbauteile 11, 13 umfassende Pumpsystem und wird über einen nicht dargestellten Auslassflansch ausgestoßen.

Das Pumpengehäuse 41 ist auf einer Basis abgestützt, die von einem Elektronikgehäuse 43 gebildet ist. Das Pumpengehäuse 41 ist mit dem Elektronikgehäuse 43 verschraubt. Das nicht vollständig dargestellte Elektronikgehäuse 43 ist an seiner Unterseite mit nicht dargestellten Füßen versehen. In dem Elektronikgehäuse 43 ist eine Elektronikausstattung untergebracht, die elektronische, elektrische und elektromechanische Komponenten umfasst, die unter anderem zur Stromversorgung und zur Steuerung der Scrollvakuumpumpe dienen.

Des Weiteren umfasst die Scrollvakuumpumpe ein nicht dargestelltes Gasballast-Ventil. In Abwandlungen dieses Grundaufbaus kann anstelle eines Gasballastventils ein mehrstufiges Gasballastsystem vorgesehen sein.

Der von der Antriebswelle 17 mit dem Exzenterabschnitt 19 gebildete Exzenterantrieb befindet sich innerhalb des Pumpengehäuses 41 und ist von einer verformbaren Hülse in Gestalt eines Wellbalgs 89 umgeben. Der Wellbalg 89 dient einerseits zur Abdichtung des Exzenterantriebs gegenüber dem Ansaugbereich der Scrollvakuumpumpe und andererseits als Verdrehsicherung für das bewegliche Spiralbauteil 13. Hierzu ist der Wellbalg 89 an der dem Antrieb zugewandten Seite des beweglichen Spiralbauteils 13 befestigt. Das hintere Ende des Wellbalgs 89 ist innerhalb des Pumpengehäuses 41 an einem Gehäusegrund mittels Schrauben angebracht.

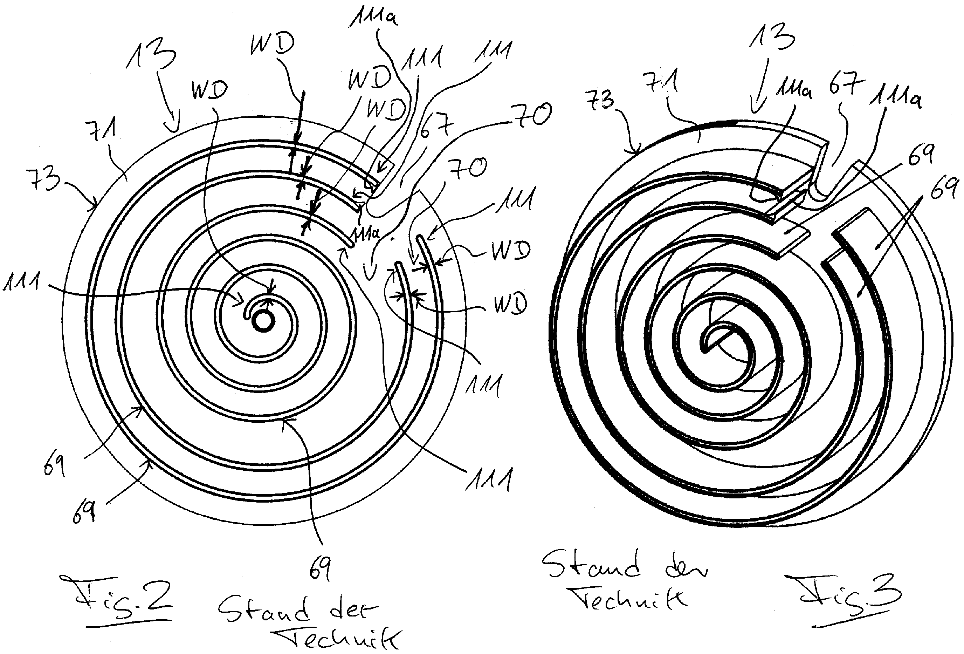

Die Fig. 2 und 3 zeigen das bewegliche Spiralbauteil 13 der Scrollvakuumpumpe von Fig. 1 und dienen zur Erläuterung des Grundaufbaus eines solchen beweglichen Spiralbauteils 13. Ausführungsformen eines erfindungsgemäßen feststehenden Spiralbauteils (nicht dargestellt) können einen entsprechenden Grundaufbau aufweisen.

Das bewegliche Spiralbauteil 13 umfasst eine Spiralanordnung mit Spiralwänden 69 und Spiralgrund 71 sowie einen plattenförmigen Träger 73 für die Spiralanordnung. Die beiden radial äußeren Spiralwände 69 verlaufen auf konzentrischen Kreisen, sind im Bereich eines Gaseinlasses 67 in Umfangsrichtung unterbrochen und werden - wie vorstehend bereits erwähnt - trotz ihrer Teilkreisform ebenfalls als Spiralwände bezeichnet. Eine radial innen liegende Spiralwand 69 verläuft spiralförmig. Die Spiralwände 69 sind an ihrem vom Spiralgrund 71 abgewandten Ende mit einem hier nicht dargestellten Dichtungselement 75 (TipSeal) versehen.

Zwischen den beiden teilkreisförmigen Spiralwänden 69 ist eine radial äußere Spiralnut 70 vorgesehen. Eine weitere, spiralförmig verlaufende Spiralnut 70 wird von der spiralförmigen Spiralwand 69 begrenzt.

Die Spiralwände 69 besitzen jeweils zwei freie Endabschnitte 111. Die Wanddicke WD der Spiralwände einschließlich der Endabschnitte 111 ist - mit der nachstehend genannten Ausnahme - jeweils über den gesamten Verlauf konstant. Lediglich die an der Aussparung 67 liegenden Endabschnitte 111 der beiden teilkreisförmigen Spiralwände 69 sind an ihrem freien Ende jeweils mit einer radialen Erweiterung 111a versehen, wobei sich das Ende der radial äußeren Spiralwand 69 radial nach innen und das Ende der inneren Spiralwand 69 radial nach außen erweitert. An diesen Enden nimmt folglich die Dicke dieser beiden Spiralwände 69 zu.

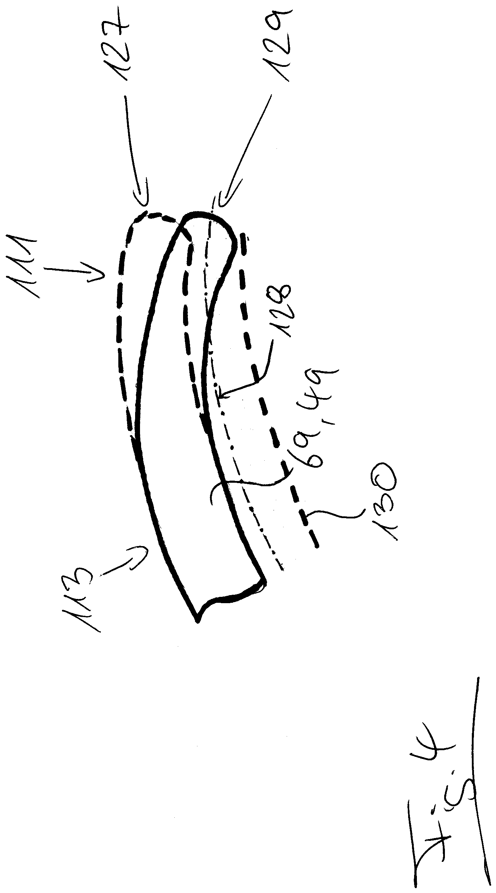

In Fig. 4 ist rein zu Illustrationszwecken die Problematik eines Zurückfederns eines freien Endabschnitts 111 einer Spiralwand 69, 49 eines Spiralbauteils veranschaulicht, die an ihrer Innenseite bearbeitet worden ist.

Eine Spiralwand, die an ihrem Endabschnitt 111 bei der Bearbeitung durch das Bearbeitungswerkzeug nicht radial ausgelenkt wird, die also gewissermaßen eine unendlich hohe Steifigkeit besitzt, würde im Anschluss an die Bearbeitung, also nach dem Entfernen des Bearbeitungswerkzeugs, mit ihrem Endabschnitt die in Fig. 4 gestrichelt dargestellte ideale Position 127 einnehmen und somit innerhalb einer durch eine strichpunktierte Linie veranschaulichten Toleranzgrenze 128 liegen. Mit einer gestrichelten Linie ist in Fig. 4 die ursprüngliche Position 130 der Innenseite der Spiralwand 69, 49 veranschaulicht, welche die Innenseite vor der Bearbeitung einnimmt. Diese gestrichelte Linie 130 besitzt einen konstanten Abstand von der Innenseite der bearbeiteten unendlich steifen Spiralwand, d.h. der konstante Abstand veranschaulicht, dass bei einer unendlich steifen Spiralwand auch an deren Endabschnitt 111 die gleiche Materialabnahme erfolgen würde wie an dem vorgelagerten Abschnitt 113. Tatsächlich besteht in der Praxis das Problem, dass aufgrund der elastischen Verformbarkeit der Spiralwände 69, 49 an ihren Endabschnitten 111 diese bei der Bearbeitung ausgelenkt werden, wodurch das Bearbeitungswerkzeug, das entlang einer durch die Programmierung der Werkzeugmaschine vorgegebenen Bahn bewegt wird, weniger Material abnimmt, als es bei einer unendlich steifen Spiralwand der Fall wäre, die dem Bearbeitungswerkzeug nicht nachgibt. Der von dem Bearbeitungswerkzeug ausgelenkte Endabschnitt 111 federt nach der Bearbeitung zurück und nimmt - da er aufgrund der zu geringen Materialabnahme nicht die vorgegebene Sollkontur, auf welche die Toleranzgrenze 128 abgestimmt ist, erhalten hat - nach der Bearbeitung die mit durchgezogener Linie in Fig. 4 dargestellte tatsächliche Position 129 ein. Dies hat zur Folge, dass der Endabschnitt 111 teilweise außerhalb der Toleranzgrenze 128 liegt.

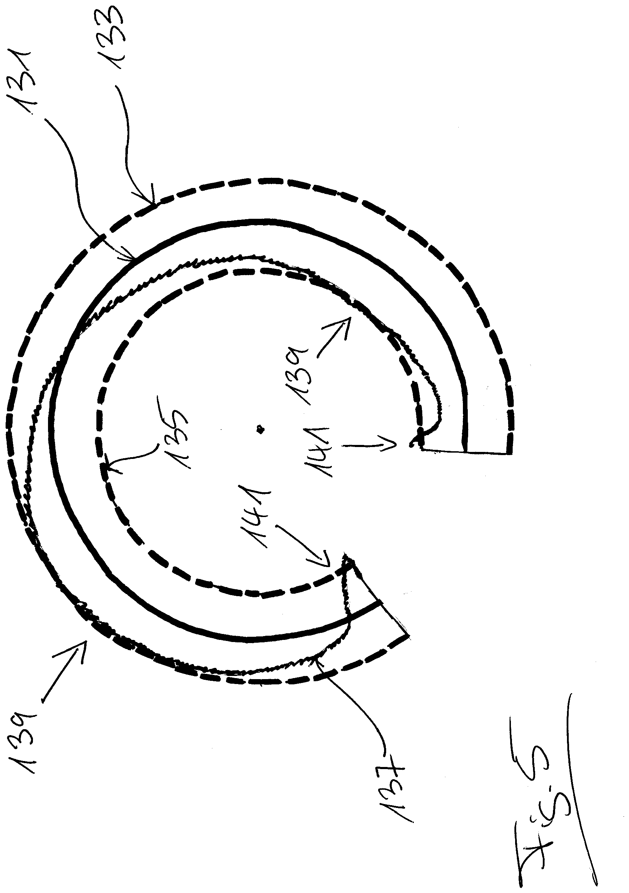

Fig. 5 veranschaulicht, wie sich die anhand von Fig. 4 erläuterten Rückfederungseffekte in der Praxis bei der Herstellung von Spiralbauteilen mittels einer Werkzeugmaschine auswirken können. In der Steuerung der Werkzeugmaschine wird beispielsweise für die Innenseite der herzustellenden Spiralwand eine Sollkontur 131 vorgegeben, für die ein Toleranzbereich festgelegt ist, der durch eine radial äußere Toleranzgrenze 133 und eine radial innere Toleranzgrenze 135 definiert ist.

Die Sollkontur 131 und die beiden Toleranzgrenzen 133, 135 sind hier als Teilkreise und somit im Hinblick auf teilkreisförmige Spiralwände dargestellt. Für eine spiralförmig verlaufende Spiralwand verlaufen diese Linien entsprechend spiralförm ig.

Im Idealfall liegt die Innenseite der hergestellten Spiralwand auf der Sollkontur 131. Bei einer real hergestellten Spiralwand, welche die vorgegebenen Maße innerhalb der vorgegebenen Toleranz einhält, befindet sich deren durch eine Messung mittels einer Koordinatenmessmaschine ergebende Innenseite 137 (gemessene Innenseite 137) innerhalb der Toleranzgrenzen 133, 135. Mit Ausnahme der Endabschnitte ist diese gemessene Innenseite 137 im Wesentlichen lediglich gegenüber der Sollkontur 131 verschoben, wobei zwei "kritische Bereiche" 139 dargestellt sind, an denen die gemessene Innenseite 137 nahe oder auf der jeweiligen Toleranzgrenze 133 bzw. 135 liegt.

Die vorstehend erläuterten Rückfederungseffekte an den Endabschnitten der hergestellten Spiralwand führen allerdings bei der Messung zu "Störungen" 141 in Form von Überschreitungen der Toleranzgrenze 135. Diese Überschreitungen treten allerdings nicht aufgrund einer lediglich nicht optimalen Einstellung der Werkzeugmaschine auf, sondern eben aufgrund der erläuterten Rückfederungseffekte. Eine automatische Korrektur der Werkzeugmaschine könnte die vorstehend erwähnte Verschiebung der gemessenen Innenseite 137 bezüglich der Sollkontur 131 erkennen und eine entsprechende automatische Korrektur der Werkzeugmaschine vornehmen, wenn nicht die Störbereiche 141 vorhanden wären. Diese durch die Rückfederungen verursachten Störungen machen in der Praxis eine automatische Messkorrektur unmöglich, so dass durch einen manuellen Eingriff einer Bedienperson dafür gesorgt werden muss, dass die Störbereiche 141 bei der Korrektur außen vor bleiben. Da - wie im Einleitungsteil erläutert - jede Spiralwand nach ihrer Herstellung vermessen und anschließend auf Basis dieser Messergebnisse die Einstellung der Werkzeugmaschine gegebenenfalls korrigiert wird, haben die zurückfedernden Endabschnitte der Spiralwände insgesamt eine Verzögerung des Herstellungsprozesses zur Folge.

Ein erfindungsgemäßes Spiralbauteil - hier am Beispiel eines beweglichen Spiralbauteils 13 (Orbiter) - ist in Fig. 6 und 7 dargestellt. Die Endabschnitte 111 der Spiralwände 69 sind speziell in erfindungsgemäßer Weise gefertigt worden. Die Endabschnitte der Spiralwände des feststehenden Spiralbauteils (Spiralgehäuse) können ebenfalls in dieser Weise hergestellt sein.

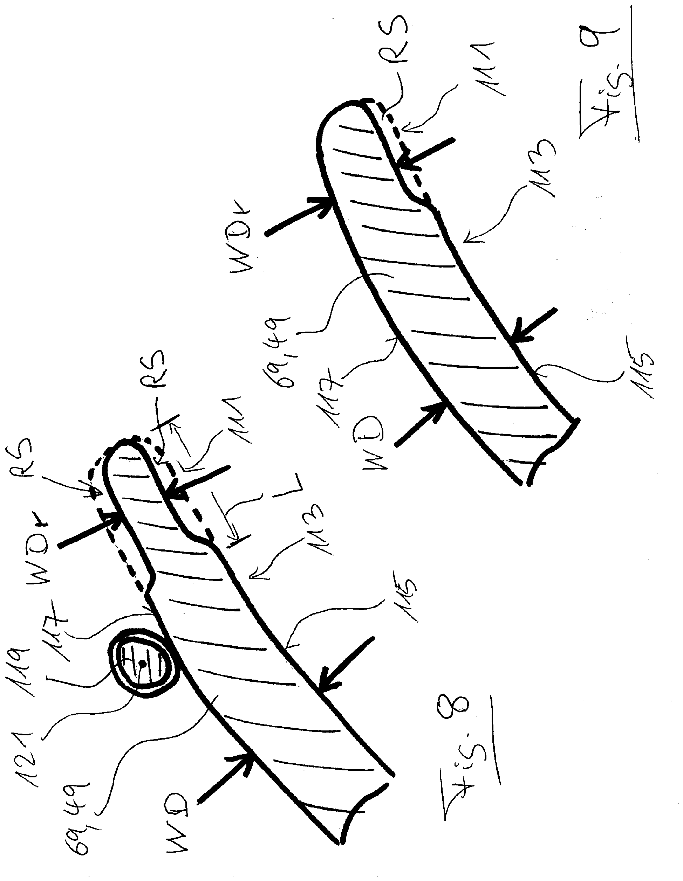

Die Endabschnitte 111 ohne radiale Erweiterung am Ende sind in dem hier dargestellten Ausführungsbeispiel auf beiden Seiten, also sowohl auf der radialen Innenseite als auch auf der radialen Außenseite, jeweils mit einem sich über die gesamte Wandhöhe erstreckenden Rücksprung RS versehen, so dass insgesamt die freien Endabschnitte 111 jeweils eine reduzierte Dicke WDr (vgl. auch Fig. 8 und 9) aufweisen, die kleiner ist als die Dicke WD des dem freien Endabschnitt 111 vorgelagerten Abschnitts 113 der Spiralwand 69. Die Übergänge 112 in den freien Endabschnitt 111 auf der radialen Innenseite und auf der radialen Außenseite können grundsätzlich einen beliebigen Verlauf aufweisen.

Diejenigen Endabschnitte 111, die am Ende mit einer radialen Erweiterung 111a versehen sind, besitzen jeweils auf der von der radialen Erweiterung abgewandten Seite einen Rücksprung RS. Nur auf dieser Seite sind diese Endabschnitte 111 gegenüber dem vorgelagerten Abschnitt 113 der Spiralwand 69 zurückversetzt.

Fig. 8 veranschaulicht das Verfahren zur Herstellung einer Spiralwand 69, 49 mittels eines um eine Achse 121 rotierenden Fräswerkzeugs 119, beispielsweise eines Schaftfräsers. Durch die gestrichelte Linie ist die herkömmliche Vorgabe zur Herstellung des freien Endabschnitts 111 der Spiralwand 69, 49 angedeutet, wonach der freie Endabschnitt 111 die gleiche Wanddicke WD aufweist wie der vorgelagerte Abschnitt 113. Erfindungsgemäß erfolgt die Vorgabe für die Bearbeitung des freien Endabschnitts 113 nun derart, dass sowohl an der Außenseite 117 als auch an der Innenseite 115 der freie Endabschnitt 111 mittels des Werkzeugs 119 bei der Bearbeitung mit einem Rücksprung RS versehen wird. Hierdurch ist der freie Endabschnitt 111 sowohl an der Außenseite 117 als auch an der Innenseite 115 gegenüber dem vorgelagerten Abschnitt 113 zurückversetzt, so dass eine reduzierte Wanddicke WDr resultiert, die kleiner ist als die Wanddicke WD des vorgelagerten Abschnitts 113. Die Länge L des die reduzierte Wanddicke WDr aufweisenden Endabschnitts 111 liegt vorzugsweise im Bereich von 3mm bis 10mm.

Gemäß einem alternativen Ausführungsbeispiel, das in Fig. 9 schematisch dargestellt ist, kann eine reduzierte Wanddicke WDr auch dadurch erzeugt werden, dass nur an einer Seite des freien Endabschnitts 111 - hier an der radialen Innenseite 115 - ein Rücksprung RS mittels des hier nicht dargestellten Bearbeitungswerkzeugs hergestellt wird.

Wenn ein mit einem oder zwei derartigen Rücksprüngen RS versehener Endabschnitt 111 nach der Bearbeitung zurückfedert, bleibt der Endabschnitt 111 innerhalb der hier nicht dargestellten Sollkontur, also innerhalb des Toleranzbereiches, da durch die Vorgabe für die Bearbeitung von dem Bearbeitungswerkzeug mehr Material weggenommen wird als ohne die Vorgabe zur Herstellung einer reduzierten Dicke WDr bzw. eines oder zweier Rücksprünge RS.

Die reduzierte Wanddicke WDr bzw. der oder die Rücksprünge RS werden hinsichtlich ihrer Größe in Abhängigkeit von den jeweiligen Gegebenheiten vorgegeben, also insbesondere - wie im Einleitungsteil erwähnt - in Abhängigkeit von den mechanischen Eigenschaften der herzustellenden Spiralwand und den Bearbeitungsparametern der Werkzeugmaschine und dabei insbesondere der Kraft, mit der das Werkzeug 119 (vgl. Fig. 8) während der Bearbeitung gegen die Innenseite 115 bzw. die Außenseite 117 der herzustellenden Spiralwand 69, 49 gedrückt wird.

### Bezugszeichenliste

- 11: feststehendes Spiralbauteil, Spiralgehäuse
- 13: bewegliches Spiralbauteil, Orbiter
- 15: Drehachse
- 17: Antriebswelle
- 17a: Schulter
- 19: Exzenterabschnitt
- 21: Motorrotor
- 23: Motorstator
- 25: vordere Lagerstelle (Festlager)
- 27: hintere Lagerstelle (Loslager)
- 29: vorderes Wuchtgewicht
- 31: hinteres Wuchtgewicht
- 33: Hülsenelement
- 34: Zwischenelement
- 41: Pumpengehäuse
- 43: Elektronikgehäuse
- 49: Spiralwand des feststehenden Spiralbauteils
- 51: Spiralgrund
- 53: Träger
- 67: Aussparung
- 69: Spiralwand des beweglichen Spiralbauteils
- 70: Spiralnut
- 71: Spiralgrund
- 73: Träger
- 75: Dichtungselement
- 77: Einlassflansch
- 83: zentrale Schraube
- 87: Druckelement
- 89: Wellbalg
- 91: Flanschlager
- 93: Druckscheibe
- 94: Passscheibe
- 95: Lüfter
- 97: Positionierstift
- 99: Wellfeder
- 103: Motordeckel
- 105: Haube

- 111: Endabschnitt
- 111a: Erweiterung
- 112: Übergang
- 113: vorgelagerter Abschnitt
- 115: Innenseite
- 117: Außenseite
- 119: Werkzeug
- 121: Rotationsachse
- 123: Nut

- 127: ideale Position des Endabschnitts
- 128: Toleranzgrenze
- 129: tatsächliche Position des Endabschnitts
- 130: ursprüngliche Position der Innenseite
- 131: Sollkontur
- 133: radial äußere Toleranzgrenze
- 135: radial innere Toleranzgrenze
- 137: gemessene Innenseite
- 139: kritischer Bereich
- 141: "Störung" durch Rückfederung

- WDr: reduzierte Dicke
- WD: Dicke
- RS: Rücksprung
- L: Länge

## Patentansprüche

1. Scrollvakuumpumpe mit
- einem Pumpsystem, das ein feststehendes Spiralbauteil (11) und ein mit diesem pumpwirksam zusammenwirkendes bewegliches Spiralbauteil (13) umfasst,
- einer im Betrieb um eine Drehachse (15) rotierenden Antriebswelle (17) mit einem Exzenterabschnitt (19) zum Antreiben des beweglichen Spiralbauteils (13), und
- einem elektrischen Antriebsmotor (21, 23) für die Antriebswelle (17),
wobei das bewegliche Spiralbauteil (13) eine Spiralanordnung mit Spiralwänden (69), von diesen begrenzten Spiralnuten (70) und deren Boden bildendem Spiralgrund (71) sowie einen mit dem Exzenterabschnitt (19) der Antriebswelle (17) zusammenwirkenden Träger (73) für die Spiralanordnung umfasst,
wobei das feststehende Spiralbauteil (11) eine Spiralanordnung mit Spiralwänden (49) und Spiralgrund (51) sowie einen Träger (53) für die Spiralanordnung umfasst, und
wobei zumindest eine Spiralwand (69, 49) an einem freien Endabschnitt (111) eine reduzierte Dicke (WDr) aufweist, die kleiner ist als die Dicke (WD) eines dem freien Endabschnitt (111) vorgelagerten, in den freien Endabschnitt (111) übergehenden Abschnitts (113) der Spiralwand (69, 49).

2. Scrollvakuumpumpe mit
- einem Pumpsystem, das ein feststehendes Spiralbauteil (11) und ein mit diesem pumpwirksam zusammenwirkendes bewegliches Spiralbauteil (13) umfasst,
- einer im Betrieb um eine Drehachse (15) rotierenden Antriebswelle (17) mit einem Exzenterabschnitt (19) zum Antreiben des beweglichen Spiralbauteils (13), und
- einem elektrischen Antriebsmotor (21, 23) für die Antriebswelle (17),
wobei das bewegliche Spiralbauteil (13) eine Spiralanordnung mit Spiralwänden (69), von diesen begrenzten Spiralnuten (70) und deren Boden bildendem Spiralgrund (71) sowie einen mit dem Exzenterabschnitt (19) der Antriebswelle (17) zusammenwirkenden Träger (73) für die Spiralanordnung umfasst,
wobei das feststehende Spiralbauteil (11) eine Spiralanordnung mit Spiralwänden (49) und Spiralgrund (51) sowie einen Träger (53) für die Spiralanordnung umfasst, und
wobei zumindest eine Spiralwand (69, 49) einen freien Endabschnitt (111) aufweist, der an seiner radialen Außenseite und/oder an seiner radialen Innenseite relativ zu einem dem freien Endabschnitt (111) vorgelagerten, in den freien Endabschnitt (111) übergehenden Abschnitt (113) der Spiralwand (69, 49) einen Rücksprung (RS) aufweist.

3. Scrollvakuumpumpe nach Anspruch 1 oder 2,
wobei die reduzierte Dicke (WDr) des freien Endabschnitts (111) über die gesamte Wandhöhe kleiner ist als die Dicke (WD) des vorgelagerten Abschnitts (113) und/oder wobei der Rücksprung (RS) sich über die gesamte Wandhöhe des freien Endabschnitts (111) erstreckt.

4. Scrollvakuumpumpe nach einem der vorhergehenden Ansprüche,
wobei die reduzierte Dicke (WDr) des freien Endabschnitts (111) über die gesamte Wandhöhe konstant ist und/oder wobei der Rücksprung (RS) über die gesamte Wandhöhe des Endabschnitts (111) konstant ist.

5. Scrollvakuumpumpe nach einem der Ansprüche 1 bis 3,
wobei die reduzierte Dicke (WDr) des freien Endabschnitts (111) vom Spiralgrund (71) bis zur Spitze der Spiralwand (69, 49) stetig abnimmt, insbesondere wobei am Spiralgrund (71) der freie Endabschnitt (111) und der vorgelagerte Abschnitt (113) der Spiralwand (69, 49) die gleiche Dicke (WD) besitzen, und/oder wobei der Rücksprung (RS) des freien Endabschnitts (111) von der Spitze der Spiralwand (69, 49) bis zum Spiralgrund (71) stetig abnimmt, insbesondere wobei am Spiralgrund (71) der Rücksprung (RS) gleich Null ist.

6. Scrollvakuumpumpe nach einem der vorhergehenden Ansprüche,
wobei der freie Endabschnitt (111) sowohl an seiner radialen Innenseite (115) als auch an seiner radialen Außenseite (117) jeweils einen Rücksprung (RS) relativ zu dem vorgelagerten Abschnitt (113) aufweist, oder wobei der freie Endabschnitt (111) nur an seiner radialen Innenseite (115) einen Rücksprung (RS) relativ zu dem vorgelagerten Abschnitt (113) aufweist.

7. Scrollvakuumpumpe nach einem der vorhergehenden Ansprüche,
wobei die Spiralwand (69) durch spanende Bearbeitung mittels einer Werkzeugmaschine hergestellt worden ist, die ein rotierendes Werkzeug (119), insbesondere ein Fräswerkzeug, aufweist, das während der Bearbeitung gegen die radiale Innenseite (115) bzw. gegen die radiale Außenseite (117) der herzustellenden Spiralwand (69, 49) gedrückt wird, insbesondere wobei das Werkzeug (119) während der Bearbeitung auf einer die reduzierte Dicke und/oder den Rücksprung (RS) am Endabschnitt (111) der Spiralwand (69, 49) vorgebenden Bahn geführt wird.

8. Scrollvakuumpumpe nach Anspruch 7,
wobei in zumindest einer senkrecht zur Drehachse (15) der Antriebswelle (17) verlaufenden Ebene eine Sollkontur für die Spiralwand (69, 49) vorgegeben ist, und wobei die Bahn für das Werkzeug (119) derart vorgegeben ist, dass der während der Bearbeitung durch das Werkzeug (119) ausgelenkte und nach der Bearbeitung zurückfedernde Endabschnitt (111) der Spiralwand (69, 49) innerhalb der Sollkontur bleibt.

9. Scrollvakuumpumpe nach einem der vorhergehenden Ansprüche,
wobei das bewegliche Spiralbauteil (13) und das feststehende Spiralbauteil (11) jeweils aus Aluminium oder aus einem Aluminium enthaltenden Material hergestellt sind.

10. Scrollvakuumpumpe nach einem der vorhergehenden Ansprüche,
wobei die reduzierte Dicke (WDr) des Endabschnitts (111) zwischen 85% bis 98%, insbesondere zwischen 92% und 95%, der Dicke (WD) des vorgelagerten Abschnitts (113) beträgt, oder wobei die reduzierte Dicke (WDr) des Endabschnitts (111) um 1/10mm bis 3/1 0mm kleiner ist als die Dicke (WD) des vorgelagerten Abschnitts (113), und/oder wobei der Rücksprung (RS) des Endabschnitts (111) zwischen 0,5/10mm und 2/10mm liegt.

11. Scrollvakuumpumpe nach einem der vorhergehenden Ansprüche,
wobei die in Verlaufsrichtung der Spiralwand (69, 49) gemessene Länge (L) des Endabschnitts (111) im Bereich von 3mm bis 10mm liegt.

12. Verfahren zum Herstellen einer Scrollvakuumpumpe nach einem der vorhergehenden Ansprüche oder zum Herstellen eines Spiralbauteils (13, 11) für eine Scrollvakuumpumpe nach einem der vorhergehenden Ansprüche, wobei die Spiralwand (69, 49) durch spanende Bearbeitung mittels einer Werkzeugmaschine hergestellt wird, die ein rotierendes Werkzeug (119), insbesondere ein Fräswerkzeug, aufweist, das während der Bearbeitung gegen die radiale Innenseite (115) bzw. gegen die radiale Außenseite (117) der herzustellenden Spiralwand (69, 49) gedrückt wird.

13. Verfahren nach Anspruch 12,
wobei das Werkzeug (119) während der Bearbeitung auf einer Bahn geführt wird, durch welche die reduzierte Dicke (WDr) und/oder der Rücksprung (RS) am Endabschnitt (111) der Spiralwand (69, 49) vorgegeben wird.

14. Verfahren nach Anspruch 12 oder 13,
wobei in zumindest einer senkrecht zur Drehachse (15) der Antriebswelle (17) verlaufenden Ebene eine Sollkontur für die Spiralwand (69, 49) vorgegeben wird, und wobei die Bahn, auf der das Werkzeug (119) während der Bearbeitung geführt wird, derart vorgegeben wird, dass der während der Bearbeitung durch das Werkzeug (119) ausgelenkte und nach der Bearbeitung zurückfedernde Endabschnitt (111) der Spiralwand (69, 49) innerhalb der Sollkontur bleibt.

15. Verfahren nach einem der Ansprüche 12 bis 14,
wobei für die reduzierte Dicke (WDr) des Endabschnitts (111) und/oder für den Rücksprung (RS) des Endabschnitts (111) einerseits und für die Dicke (WD) des vorgelagerten Abschnitts (113) andererseits unterschiedliche Maßtoleranzen vorgegeben werden, wobei insbesondere die Maßtoleranz jeweils +/- 1/10mm ist, insbesondere +/- 1/100mm bis +/- 6/100mm beträgt.
